(19) **Europäisches Patentamt / European Patent Office / Office européen des brevets**

(11) **EP 4 703 398 A1**

(12) **EUROPEAN PATENT APPLICATION**
published in accordance with Art. 153(4) EPC

(43) Date of publication:
**04.03.2026 Bulletin 2026/10**

(21) Application number: **24796810.0**

(22) Date of filing: **11.04.2024**

(51) International Patent Classification (IPC):
$C08G\ 18/10$ (2006.01)  $B32B\ 27/00$ (2006.01)
$B32B\ 27/40$ (2006.01)  $B65D\ 65/40$ (2006.01)
$C08G\ 18/48$ (2006.01)  $C09J\ 175/04$ (2006.01)
$C09J\ 175/08$ (2006.01)

(52) Cooperative Patent Classification (CPC):
**B32B 27/00; B32B 27/40; B65D 65/40;
C08G 18/10; C08G 18/48; C09J 175/04;
C09J 175/08**

(86) International application number:
**PCT/JP2024/014629**

(87) International publication number:
**WO 2024/225054 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.04.2023 JP 2023073261**

(71) Applicant: **DIC Corporation**
**Tokyo 174-8520 (JP)**

(72) Inventors:
- **HIROTA, Yasunobu**
  **Itabashi-ku, Tokyo 174-8520 (JP)**
- **KAYASUGA, Tomoya**
  **Tokyo 174-8520 (JP)**

(74) Representative: **Kraus & Lederer PartGmbB**
**Thomas-Wimmer-Ring 15**
**80539 München (DE)**

(54) **POLYURETHANE POLYISOCYANATE, METHOD FOR PRODUCING POLYURETHANE POLYISOCYANATE, POLYISOCYANATE COMPOSITION, ADHESIVE, LAYERED PRODUCT, AND PACKAGING MATERIAL**

(57)  Provided is a polyurethane polyisocyanate that is less colored even when the content of unreacted isocyanate monomers is removed by distillation. A polyisocyanate composition (X) contains a polyurethane polyisocyanate (A1) which is a reaction product of a diisocyanate monomer (1) and a polyol compound (m), 0.1 mass% or less of a diisocyanate monomer (1'), sodium, and magnesium. The sodium has a content of 100 ppb or more and 700 ppb or less of the polyurethane polyisocyanate (A1), the magnesium has a content of 10 ppb or more and 50 ppb or less of the polyurethane polyisocyanate (A1), and the sodium and the magnesium have a mass ratio Na/Mg of 2 or more and 70 or less.

EP 4 703 398 A1

**Description**

TECHNICAL FIELD

The present invention relates to a polyurethane polyisocyanate, a method for producing the polyurethane polyisocyanate, an isocyanate composition containing the polyurethane polyisocyanate, an adhesive containing the isocyanate composition, a laminate produced using the adhesive, and a packaging material.

BACKGROUND ART

A laminate used for various packaging materials, labels, and the like is provided with design properties, functionality, storage stability, convenience, transportability, and the like by laminating base materials such as various plastic films, metal foils, and paper. Packaging materials obtained by forming the laminate into a bag shape are used as packaging materials in various fields such as foods, pharmaceuticals, and detergents. In the production of such a laminate, a urethane reactive two-component adhesive (hereinafter, may be referred to as a two-component curable adhesive or a reactive adhesive) has been frequently used.

Examples of the urethane reactive two-component curable adhesives include a two-component curable adhesive using a component containing a certain amount of an isocyanate monomer such as an isocyanate prepolymer. However, from the viewpoint of labor safety and health, there is a movement to regulate the use of the isocyanate monomer. The European Commission has adopted the REACH regulation, which prohibits the placing on the market of products containing more than 0.1 mass% of isocyanate monomer unless certain requirements are met.

There are other concerns about the isocyanate monomer. When a laminate for food packaging is produced using a two-component curable adhesive containing an aromatic isocyanate prepolymer, an unreacted aromatic isocyanate monomer may remain in the adhesive layer. The isocyanate monomer reacts with water present around the isocyanate monomer to form a primary aromatic amine (PAA), which may move through the film and elute into the content (food). There is a concern that the PAA is harmful to the human body, and various regulations such as the determination of the detection limit of the PAA by the European committee in the rules regarding plastic materials and products for food contact are provided.

Since the PAA reacts with unreacted aromatic isocyanate present around the PAA, the concentration of the PAA gradually decreases even when the aromatic isocyanate remains in an adhesive layer. The concentration of the PAA will eventually fall below the detection limit. However, from the viewpoint of the production efficiency of the laminate for food packaging, an initial value of the aromatic isocyanate monomer remaining in the adhesive layer is preferably low.

Methods for reducing the content of isocyanate monomers have been studied from the past.

For example, PTL 1 discloses a method for forming an isocyanate functional prepolymer having a low isocyanate remaining amount, and the method includes: (a) causing a polyol selected from the group consisting of a polyether polyol, a polyester polyol, a polyester polyether polyol, an acrylic polyol, a glycol, and a mixture thereof to react with an isocyanate monomer to form a reaction mixture containing a prepolymer having an NCO content of 2.5 wt% to 11.5 wt% and an average NCO functional group in a range of 2.0 to 3.0; and (b) passing the reaction mixture containing the prepolymer and an unreacted isocyanate through a short pass evaporator to remove the unreacted isocyanate until an amount of less than 0.15 wt% is reached.

CITATION LIST

PATENT LITERATURE

PTL 1: JP2002-265552A

SUMMARY OF INVENTION

TECHNICAL PROBLEM

When the residual isocyanate monomer is removed from the isocyanate-functional prepolymer according to such a method, there is a problem that the obtained isocyanate-functional prepolymer is colored yellow or brown.

The present invention has been made in view of such circumstances, and provides a polyurethane polyisocyanate that is less colored even when the content of unreacted isocyanate monomers is removed by distillation, and a method for producing such a polyurethane polyisocyanate.

SOLUTION TO PROBLEM

That is, the present invention relates to a polyisocyanate composition (X) containing a polyurethane polyisocyanate (A1) which is a reaction product of a diisocyanate monomer (1) and a polyol compound (m), 0.1 mass% or less of a diisocyanate monomer (1'), sodium, and magnesium. The sodium has a content of 100 ppb or more and 700 ppb or less of the polyurethane polyisocyanate (A1), the magnesium has a content of 10 ppb or more and 50 ppb or less of the polyurethane polyisocyanate (A1), and the sodium and the magnesium have a mass ratio Na/Mg of 2 or more and 70 or less.

ADVANTAGEOUS EFFECTS OF INVENTION

According to the present invention, a polyurethane polyisocyanate that is less colored can be obtained even when the content of unreacted isocyanate monomers is removed by distillation.

DESCRIPTION OF EMBODIMENTS

<Polyurethane Polyisocyanate (A1)>

(Polyurethane Polyisocyanate (A1))

A polyurethane polyisocyanate (A1) of the present invention is obtained through a step (1) of obtaining a composition containing the polyurethane polyisocyanate (A1) and a diisocyanate monomer (1') by causing a diisocyanate monomer (1) to react with a polyol compound (m) in the presence of specific amounts of a sodium-containing compound and a magnesium-containing compound, and a step (2) of distilling off the diisocyanate monomer (m') from the composition obtained in the step (1) by distillation.

As the diisocyanate monomer (1), known aromatic diisocyanates, aromatic aliphatic diisocyanates, aliphatic diisocyanates, and alicyclic diisocyanates can be used alone or in combination of two or more.

Examples of the aromatic diisocyanates include, but are not limited to, 2,2'-diphenylmethane diisocyanate, 2,4'-diphenylmethane diisocyanate, 4,4'-diphenylmethane diisocyanate (another name: MDI), polymethylene polyphenyl polyisocyanate (also referred to as polymeric MDI or crude MDI), 1,3-phenylene diisocyanate, 4,4'-diphenyl diisocyanate, 1,4-phenylene diisocyanate (another name: PPDI), 2,4-tolylene diisocyanate, 2,6-tolylene diisocyanate (another name: TDI), 4,4'-toluidine diisocyanate, 2,4,6-triisocyanate toluene, 1,3,5-triisocyanate benzene, tolidine diisocyanate (another name: TODI), dianisidine diisocyanate, naphthalene diisocyanate (another name: NDI), 4,4'-diphenyl ether diisocyanate, and 4,4',4"-triphenylmethane triisocyanate.

The aromatic aliphatic diisocyanate means an aliphatic isocyanate having one or more aromatic rings in a molecule, and examples thereof include, but are not limited to, m- or p-xylylene diisocyanate (another name: XDI) and $\alpha,\alpha,\alpha',\alpha'$-tetramethylxylylene diisocyanate (another name: TMXDI).

Examples of the aliphatic diisocyanates include, but are not limited to, trimethylene diisocyanate, tetramethylene diisocyanate, hexamethylene diisocyanate (another name: HDI), pentamethylene diisocyanate (another name: PDI), 1,2-propylene diisocyanate, 2,3-butylene diisocyanate, 1,3-butylene diisocyanate, dodecamethylene diisocyanate, 2,4,4-trimethylhexamethylene diisocyanate, and lysine diisocyanate (another name: LDI).

Examples of the alicyclic diisocyanates include, but are not limited to, 3-isocyanatomethyl-3,5,5-trimethylcyclohexyl isocyanate, isophorone diisocyanate (another name: IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebiscyclohexyl isocyanate (another name: hydrogenated MDI or HMDI), 1,3-bis(isocyanatomethyl) cyclohexane (another name: hydrogenated XDI or HXDI), hydrogenated TMXDI, and norbornane diisocyanate (another name: NBDI).

As the polyol (m), a commonly known polyol can be used. Examples of the polyol (m) include glycols such as ethylene glycol, 1,2-propanediol, 1,3-propanediol, 2-methyl-1,3-propanediol, 1,4-butanediol, 1,5-pentanediol, 3-methyl-1,5-pentanediol, 1,6-hexanediol, neopentyl glycol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, and 1,4-cyclohexanedimethanol;

trifunctional or tetrafunctional aliphatic alcohols such as glycerin, trimethylolpropane, and pentaerythritol;
bisphenols such as bisphenol A, bisphenol F, hydrogenated bisphenol A, and hydrogenated bisphenol F;
dimer diols;
a polyether polyol obtained by addition polymerization of an alkylene oxide such as ethylene oxide, propylene oxide, butylene oxide, styrene oxide, epichlorohydrin, tetrahydrofuran, or cyclohexylene in the presence of a polymerization initiator such as glycol or a trifunctional or tetrafunctional aliphatic alcohol;

a polyester polyol (1), which is a reaction product of a polyester obtained by a ring-opening polymerization reaction of a cyclic ester compound such as propiolactone, butyrolactone, ε-caprolactone, σ-valerolactone, and β-methyl-σ-valerolactone with a polyhydric alcohol such as glycol, glycerin, trimethylolpropane, and pentaerythritol;

a polyester polyol (2) obtained by causing a bifunctional polyol such as glycol, dimer diol, or bisphenol to react with a polycarboxylic acid;

a polyester polyol (3) obtained by causing a trifunctional or tetrafunctional aliphatic alcohol to react with a polycarboxylic acid;

a polyester polyol (4) obtained by causing a reaction among a bifunctional polyol, a trifunctional or tetrafunctional aliphatic alcohol, and a polycarboxylic acid;

a polyester polyol (5) which is a polymer of hydroxyl acids such as dimethylolpropionic acid and castor oil fatty acid;

a polyurethane polyol (1) obtained by increasing a molecular weight of at least one selected from a bifunctional polyol and a trifunctional or tetrafunctional aliphatic alcohol with an isocyanate compound;

a polyether urethane polyol (2) obtained by further increasing the molecular weight of the polyether polyol with an isocyanate compound;

a polyester polyurethane polyol (3) obtained by increasing the molecular weight of the polyester polyols (1) to (5) with an isocyanate compound;

a polyester polyether polyurethane polyol (4) obtained by causing a reaction among at least one of the polyester polyols (1) to (5), a polyether polyol, and an isocyanate compound;

castor oil, dehydrated castor oil, hydrogenated castor oil which is a hydrogenated product of castor oil, and castor oil-based polyols such as 5 to 50 mole-alkylene oxide adduct of castor oil, and mixtures thereof. One kind or a combination of two or more kinds thereof may be used.

Examples of polycarboxylic acids used for the synthesis of the polyester polyols (2) to (4) include aromatic polybasic acids such as orthophthalic acid, terephthalic acid, isophthalic acid, phthalic anhydride, 1,4-naphthalenedicarboxylic acid, 2,5-naphthalenedicarboxylic acid, 2,6-naphthalenedicarboxylic acid, 2,3-naphthalenedicarboxylic anhydride, naphthalic acid, trimellitic acid, trimellitic anhydride, pyromellitic acid, pyromellitic anhydride, biphenyldicarboxylic acid, 1,2-bis(phenoxy) ethane-p,p'-dicarboxylic acid, benzophenonetetracarboxylic acid, benzophenonetetracarboxylic dianhydride, 5-sodium sulfoisophthalic acid, tetrachlorophthalic anhydride, and tetrabromophthalic anhydride;

methyl esters of aromatic polybasic acids, such as dimethyl terephthalate and dimethyl 2,6-naphthalenedicarboxylate;

aliphatic polybasic acids such as malonic acid, succinic acid, succinic anhydride, glutaric acid, adipic acid, pimelic acid, suberic acid, azelaic acid, sebacic acid, fumaric acid, maleic acid, maleic anhydride, and itaconic acid;

alkyl esters of aliphatic polybasic acids, such as dimethyl malonate, diethyl malonate, dimethyl succinate, dimethyl glutarate, dimethyl adipate, diethyl pimelate, diethyl sebacate, dimethyl fumarate, diethyl fumarate, dimethyl maleate, and diethyl maleate;

and alicyclic polybasic acids such as 1,1-cyclopentane dicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, tetrahydrophthalic anhydride, 4-methylhexahydrophthalic anhydride, hexahydrophthalic anhydride, cyclohexane-1,2,4-tricarboxylic acid-1,2-anhydride, himic anhydride, and HET anhydride. One kind or two or more kinds thereof can be used in combination.

The isocyanate compound used for the synthesis of the polyurethane polyols (1) to (4) may be the same as the diisocyanate monomer (m) exemplified above.

The polyol compound (m) is preferably a polyether polyol, and more preferably a polyether polyol obtained by addition polymerization of at least one alkylene oxide selected from ethylene oxide, propylene oxide, and butylene oxide in the presence of a polymerization initiator such as glycol or a trifunctional or tetrafunctional aliphatic alcohol.

In the step (1), the diisocyanate monomer (1) is caused to react with the polyol compound (m) under the condition that isocyanate groups contained in the polyisocyanate monomer (1) are excessive with respect to active hydrogen groups contained in the polyol compound (m) to obtain a composition containing the polyurethane polyisocyanate (A1) and the diisocyanate monomer (1'). The equivalent ratio [NCO]/[active hydrogen group] of the isocyanate group to the active hydrogen group may be appropriately adjusted, and is, for example, 2.0 or more and 20.0 or less. The diisocyanate monomer (1') is a monomer remaining without reacting with the active hydrogen group among the diisocyanate monomers (1) supplied to the reaction.

The urethanization reaction of the diisocyanate monomer (1) and the polyol compound (m) is performed in the presence of a sodium-containing compound and a magnesium-containing compound. At this time, the sodium-containing compound and the magnesium-containing compound are used in a range in which the content of sodium is 100 ppb or more and 700 ppb or less of the polyurethane polyisocyanate (A1), which is calculated from the use amount of the polyol compound (m), the content of magnesium is 10 ppb or more and 50 ppb or less of the polyurethane polyisocyanate (A1) calculated from the use amount of the polyol compound (m), and the mass ratio Na/Mg of sodium to magnesium is 2 or more and 70 or less. Note that the polyurethane polyisocyanate (A1) is calculated as a polyurethane polyisocyanate obtained by causing 1 mol of the diisocyanate monomer (1) to react with 1 mol of the active hydrogen group in the polyol compound (m) (for example, when the polyol compound (m) is a compound having two active hydrogen groups, one molecule of the polyol compound (m) reacts with two molecules of the diisocyanate monomer (1) to form the polyurethane polyisocyanate (A1)).

Therefore, the polyurethane polyisocyanate (A1) of the present invention contains the sodium-containing compound and the magnesium-containing compound in the above-described ranges. The content of each of sodium and magnesium in the polyurethane polyisocyanate (A1) may be calculated from the amounts of the diisocyanate monomer (1), the polyol compound (m), the sodium-containing compound, and the magnesium-containing compound before the reaction, or may be measured by induction plasma mass spectrometry (ICP-MS) under, for example, the following conditions.

Sample solution: diluted 1000 times with 2 wt/vol% nitric acid aqueous solution
Measurement instrument: 8900 ICP-MS manufactured by Agilent
Standard solution: XSTC-622B manufactured by SPEX, 10 ppm, 5% nitric acid aqueous solution
Detection condition: selection of optimum condition (MS mode, gas type)
Detection limit: 10 ppb

Examples of the sodium-containing compound include sodium hydroxide, sodium chloride, and sodium oxide. Examples of the magnesium-containing compound include, but are not limited to, magnesium hydroxide, magnesium chloride, and magnesium oxide.

The sodium-containing compound and the magnesium-containing compound may be contained in either the diisocyanate monomer (1) or the polyol compound (m), or may be contained in both the diisocyanate monomer (1) and the polyol compound (m).

In addition, in the urethanization reaction in the step (1), organometallic catalysts such as organic zinc compounds such as zinc octylate, zinc neodecanoate, and zinc naphthenate, organotin compounds such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride, organonickel compounds such as nickel octylate and nickel naphthenate, organic cobalt compounds such as cobalt octylate and cobalt naphthenate, organobismuth compounds such as bismuth octoate, bismuth neodecanoate, and bismuth naphthenate, and titanium compounds such as titanium chelate complexes having, as a ligand, at least one of tetraisopropyloxytitanate, dibutyltitanium dichloride, tetrabutyltitanium, butoxytitanium trichloride, aliphatic diketones, aromatic diketones, and alcohols having 2 to 10 carbon atoms, and

amine-based catalysts such as triethylenediamine, 2-methyltriethylenediamine, quinuclidine, 2-methylquinuclidine, N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylhexamethylenediamine, bis(2-dimethylaminoethyl)ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicyclo [5.4.0] undecene-7, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole are not used.

These compounds are often used as a catalyst for promoting the urethanization reaction. However, when the urethanization reaction proceeds to the step (2) in a state where the urethanization catalyst remains, a side reaction occurs, and problems such as coloring of the obtained polyurethane polyisocyanate to yellow or brown, NCO% that is lower than a designed value, and an increase in viscosity may occur. Therefore, in the present invention, the step (1) is performed in the absence of these urethanization catalysts.

On the other hand, when the urethanization catalyst as described above is simply not present, it takes a long time to complete the urethanization reaction. However, the synthesis of the polyurethane polyisocyanate (A1) of the present invention is performed in the presence of specific amounts of a sodium-containing compound and a magnesium-containing compound, and therefore, such a problem can be prevented.

A known method may be employed in the step (1), and an example thereof includes a method in which the polyol compound (m) is added dropwise to the diisocyanate monomer (1) heated to 30°C to 60°C under a nitrogen stream, and then the temperature is raised to 65°C to 85°C to form a urethane. The step (1) is performed until the NCO% substantially does not change (until the difference with the NCO% one hour before falls within ±0.5%). When the NCO% is not substantially changed, it is determined that the urethanization reaction is completed.

In the step (2), the diisocyanate monomer (1') is removed from the composition obtained in the step (1). The diisocyanate monomer is removed according to a method of distilling the diisocyanate monomer (1') under reduced pressure using a short pass distillation apparatus, a thin film distillation apparatus, or the like. The degree of pressure reduction and the distillation temperature are appropriately adjusted depending on the diisocyanate monomer (1') to be removed, and are, for example, 0.1 mbar or less and 120°C to 190°C. The step (2) is performed until the content of the diisocyanate monomer (1') in the total amount of the polyurethane polyisocyanate (A1) and the diisocyanate monomer (1') becomes 0.1 mass% or less. Accordingly, the polyurethane polyisocyanate (A1) for which coloring and viscosity increase are prevented can be obtained.

The content of the diisocyanate monomer (1') can be measured, for example, by gas chromatography using an internal standard in accordance with ASTM D 3432. Alternatively, the content of the diisocyanate monomer (1') can also be measured by liquid chromatography under the following conditions.

Apparatus: "ACQUITY UPLC H-Class" manufactured by Waters Corporation
Data processing: "Empower-3" manufactured by Waters Corporation
Column: "ACQUITY UPLC HSS T3" manufactured by Waters Corporation, (100 mm × 2.1 mm φ, 1.8 μm), 40°C
Eluent: ammonium formate aqueous solution/methanol, 0.3 mL/min
Detector: PDA
Preparation of sample: 1. 100 mg of appropriately blocked sample was dissolved in 10 ml of THF (for LC);
2. stirred by vortexing for 30 seconds;
3. appropriately diluted with an eluent (mobile phase); and
4. the solution was passed through a 0.2 μm filtration filter to prepare a measurement sample.

Calculation of area ratio: the calculation is performed using the maximum absorption wavelength for a target product.

<Polyisocyanate Composition>

The polyisocyanate composition of the present invention contains the polyurethane polyisocyanate (A1) obtained by the above-described method. In addition, the polyisocyanate composition may contain a polyisocyanate compound (A2) other than the polyurethane polyisocyanate (A1). Examples of the polyisocyanate compound (A2) include biuret products, nurate products, allophanate products, carbodiimide-modified products, and uretdione-modified products of at least one diisocyanate selected from aromatic diisocyanates, aromatic aliphatic diisocyanates, aliphatic diisocyanates, and alicyclic diisocyanates. The polyisocyanate compound (A2) can be used alone or in combination of two or more kinds thereof.

The same compounds as those exemplified as the diisocyanate monomer (1) can be used as the aromatic diisocyanates, the aromatic aliphatic diisocyanates, the aliphatic diisocyanates, and the alicyclic diisocyanates.

In addition, the content of the diisocyanate monomer in the polyisocyanate composition is 0.1 mass% or less.

The polyisocyanate composition of the present invention can be used as a two-component curable composition in combination with an isocyanate-reactive composition containing a compound having reactivity with isocyanate. Examples of the compound having reactivity with isocyanate include a polyether polyol, a polyester polyol, a polyester polyether polyol, a polyurethane polyol, a polyester polyurethane polyol, a polyether polyurethane polyol, a vegetable oil polyol, a sugar alcohol, a polycarbonate polyol, an acrylic polyol, a hydroxy group-containing olefin resin, a hydroxy group-containing fluororesin, and a (poly)alkanolamine.

Such a two-component curable composition can be used for, for example, an adhesive, a coating agent, a sealant, and an elastomer.

<Adhesive>

The adhesive of the present invention is a two-component curable adhesive containing a polyisocyanate composition (X) and a polyol composition (Y).

(Polyisocyanate Composition (X))

The polyisocyanate composition (X) contains the above-described polyurethane polyisocyanate (A1). In addition, the polyisocyanate composition (X) may contain the polyisocyanate compound (A2) other than the polyurethane polyisocyanate (A1). Examples of the polyisocyanate compound (A2) include biuret products, nurate products, allophanate products, carbodiimide-modified products, and uretdione-modified products of at least one diisocyanate selected from aromatic diisocyanates, aromatic aliphatic diisocyanates, aliphatic diisocyanates, and alicyclic diisocyanates. The polyisocyanate compound (A2) can be used alone or in combination of two or more kinds thereof.

When the polyisocyanate composition (X) contains the polyisocyanate compound (A2) in addition to the polyurethane polyisocyanate (A1), the content thereof can be appropriately adjusted, and as an example, the proportion of the polyurethane polyisocyanate (A1) in the total amount of the polyurethane polyisocyanate (A1) and the polyisocyanate compound (A2) is 50 mass% or more.

In the polyisocyanate composition (X) used in the adhesive of the present invention, the content of a diisocyanate monomer such as an aromatic diisocyanate, an aromatic aliphatic diisocyanate, an aliphatic diisocyanate, or an alicyclic diisocyanate exemplified as a raw material of the polyurethane polyisocyanate (A1) is 0.1 mass% or less.

When the adhesive of the present invention is used as a solventless two-component curable adhesive, the viscosity of the polyisocyanate composition (X) is adjusted to a range suitable for a non-solvent lamination method. As an example, the viscosity at 40°C is adjusted to be in a range of 100 mPas to 50000 mPas, and more preferably 500 mPas to 20000 mPas. The viscosity of the polyisocyanate composition (X) can be adjusted by, for example, adjusting the structure (polyol to be used) of the polyurethane polyisocyanate (A1) or using the polyisocyanate compound (A2) in combination. The viscosity of the polyisocyanate composition (X) can be measured, for example, using a rotational viscometer at a cone plate of $1° \times 50$ mm (diameter), a shear rate of 100 sec$^{-1}$, and $40°C \pm 1°C$.

(Polyol Composition (Y))

The polyol composition (Y) contains a polyol compound (B) having a plurality of hydroxy groups. The polyol compound (B) is not particularly limited, and any polyol compound can be used as long as it is usually used in a urethane-reactive two-component curable adhesive.

Specific examples of the polyol compound (B) include a polyether polyol, a polyester polyol, a polyester polyether polyol, a polyurethane polyol, a polyester polyurethane polyol, a polyether polyurethane polyol, a vegetable oil polyol, a sugar alcohol, a polycarbonate polyol, an acrylic polyol, a hydroxy group-containing olefin resin, and a hydroxy group-containing fluororesin.

Examples of the polyether polyol include addition polymerized products of alkylene oxides such as ethylene oxide, propylene oxide, butylene oxide, styrene oxide, epichlorohydrin, tetrahydrofuran, and cyclohexylene in the presence of a polymerization initiator such as glycols, for example, ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol bishydroxyethoxybenzene, 1,4-cyclohexanediol, 1,4-cyclohexanedimethanol, and triethylene glycol, and trifunctional or tetrafunctional aliphatic alcohols such as glycerin, trimethylolpropane, pentaerythritol, and triols of polypropylene glycol. Polypropylene polyol is preferably used.

The polyester polyol is a reaction product of a polyhydric alcohol and a polycarboxylic acid. The polyhydric alcohol used for the synthesis of the polyester polyol may be a diol or a tri- or higher functional polyol. In addition, a polyester polyether polyol using the polyether polyol or a polyester polyurethane polyol using a polyurethane polyol described below may be used as a diol.

Examples of the diol include aliphatic diols such as ethylene glycol, diethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl-1,5-pentanediol, neopentyl glycol, 1,6-hexanediol, 1,4-bis(hydroxymethyl)cyclohexane, and 2,2,4-trimethyl-1,3-pentanediol;

ether glycols such as polyoxyethylene glycol and polyoxypropylene glycol;
modified polyether diols obtained by ring-opening polymerization of aliphatic diols and various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether;
lactone-based polyester polyols obtained by a polycondensation reaction of aliphatic diols and various lactones such as lactanoid and ε-caprolactone;
bisphenols such as bisphenol A and bisphenol F; and
alkylene oxide adducts of bisphenols obtained by adding ethylene oxide, propylene oxide, or the like to bisphenols such as bisphenol A and bisphenol F.

Examples of the tri- or higher functional polyols include aliphatic polyols such as trimethylolethane, trimethylolpropane, glycerin, hexanetriol, and pentaerythritol;

modified polyether polyols obtained by ring-opening polymerization of aliphatic polyols and various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether; and
lactone-based polyester polyols obtained by a polycondensation reaction of aliphatic polyols and various lactones such as ε-caprolactone.

Examples of the polycarboxylic acid used for the synthesis of the polyester polyol include aliphatic dicarboxylic acids such as succinic acid, adipic acid, azelaic acid, sebacic acid, dodecanedicarboxylic acid, maleic anhydride, fumaric acid, 1,3-cyclopentanedicarboxylic acid, and 1,4-cyclohexanedicarboxylic acid; aromatic dicarboxylic acids such as orthophthalic acid, isophthalic acid, terephthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid; anhydrides or ester-forming derivatives of these aliphatic or dicarboxylic acids; p-hydroxybenzoic acid, p-(2-hydroxyethoxy)benzoic acid, ester-forming derivatives of these dihydroxycarboxylic acids, and polybasic acids such as dimer acids.

Examples of the vegetable oil polyol include castor oil, dehydrated castor oil, hydrogenated castor oil which is a hydrogenated product of castor oil, and 5 to 50 mole-alkylene oxide adduct of castor oil.

The polyurethane polyol is a reaction product of a low-molecular-weight or high-molecular-weight polyol and a polyisocyanate compound. As the low-molecular-weight polyol, the same compounds as the polyhydric alcohols exemplified as the raw material of the polyester polyol can be used. Examples of the high-molecular-weight polyol include polyether polyols and polyester polyols. As the polyisocyanate compound, those exemplified as the diisocyanate monomer (1) and those exemplified as the polyisocyanate compound (A2) can be used.

Examples of the sugar alcohols include pentaerythritol, sucrose, xylitol, sorbitol, isomalt, lactitol, maltitol, and mannitol sugar.

In the polyisocyanate composition (X) of the present invention, the content of the diisocyanate monomer is extremely small, and therefore, there is little concern about PAA, and coloring is also prevented. Therefore, the adhesive of the present invention can be suitably used particularly for production of a laminate for a packaging material used for food packaging or the like. When the adhesive of the present invention is used for such an application, the polyol compound (B) preferably contains at least one selected from a polyether polyol, a polyester polyol, a polyester polyether polyol, a polyurethane polyol, a polyester polyurethane polyol, a polyether polyurethane polyol, a vegetable oil polyol, and a sugar alcohol.

The content of each of these polyol compounds (B) may be appropriately adjusted depending on the purpose, and is, for example, 50 mass% or more in the solid content of the polyol composition (Y).

(Amine Compound (C))

The polyol composition (Y) may contain an amine compound (C) having an amino group. Note that in the present description, the amino group refers to an $NH_2$ group or an NHR group (R represents an alkyl group or an aryl group which may have a functional group).

As the amine compound (C), known compounds can be used without particular limitation. Examples thereof include methylenediamine, ethylenediamine, isophoronediamine, 3,9-dipropaneamine-2,4,8,10-tetraoxaspirodoundecane, lysine, 2,2,4-trimethylhexamethylenediamine, hydrazine, piperazine, 2-hydroxyethylethylenediamine, di-2-hydroxyethylethylenediamine, di-2-hydroxyethylpropylenediamine, 2-hydroxypropylethylenediamine, di-2-hydroxypropylethylenediamine, poly(propylene glycol)diamine, poly(propylene glycol)triamine, poly(propylene glycol)tetraamine, 1,2-diaminopropane, 1,3-diaminopropane,

1,4-diaminobutane, 1,5-diaminopentane, 1,6-diaminohexane, 1,7-diaminoheptane, 1,8-diaminooctane, 1,9-diaminononane, 1,10-diaminodecane, diethylenetriamine, dipropylenetriamine, triethylenetetramine, tripropylenetetramine, tetraethylenepentamine, tetrapropylenepentamine, pentaethylenehexamine, nonaethylenedecamine, trimethylhexamethylenediamine, tetra(aminomethyl)methane, tetrakis(2-aminoethylaminomethyl)methane, 1,3-bis(2'-aminoethylamino)propane, triethylene-bis(trimethylene)hexamine, bis(3-aminoethyl)amine, bishexamethylenetriamine, 1,4-cyclohexanediamine, 4,4'-methylenebiscyclohexylamine, 4,4'-isopropylidene biscyclohexylamine, norbornadiamine,
an amine compound (C1) having a plurality of amino groups, such as bis(aminomethyl)cyclohexane, diaminodicyclohexylmethane, isophoronediamine, menthenediamine, bis(cyanoethyl)diethylenetriamine, 1,4-bis-(8-aminopropyl)-piperazine, piperazine-1,4-diazacycloheptane, 1-(2'-aminoethylpiperazine), 1-[2'-(2"-aminoethylamino)ethyl]piperazine, tricyclodecanediamine, and polyurea amines which are reaction products of the above-described various polyamines and the above-described various isocyanate components,

a primary or secondary alkanolamine (C2) such as monoethanolamine, monoisopropanolamine, monobutanolamine, N-methylethanolamine, N-ethylethanolamine, N-methylpropanolamine, diethanolamine, and diisopropanolamine, and

a primary or secondary amine (C3) such as ethylamine, octylamine, laurylamine, myristylamine, stearylamine, oleylamine, diethylamine, dibutylamine, and distearylamine.

The amine compound (C) is preferably blended in a blending amount such that the amine value of the polyol composition (Y) is 20 mgKOH/g to 70 mgKOH/g, and more preferably 25 mgKOH/g to 50 mgKOH/g.

Note that the amine value in the present description means the number of milligrams of KOH equivalent to the amount of HCl required to neutralize 1 g of a sample and is not particularly limited. The amine value can be calculated using a known method. When the chemical structure of the amine compound (C) and, if necessary, the average molecular weight and the like are known, the amine value can be calculated from (number of amino groups per molecule/average molecular weight) $\times 56.1 \times 1000$. When the chemical structure, the average molecular weight, and the like of the amine compound are unknown, the amine value can be measured according to a known amine value measurement method, for example, JISK7237-1995.

(Monool Compound (D))

The polyol composition (Y) may contain a monool compound (D) having one alcoholic hydroxy group. The main chain of the monool compound (D) is not particularly limited, and examples thereof include a vinyl resin having one hydroxy group, an acrylic resin having one hydroxy group, a polyester having one hydroxy group, an epoxy resin having one hydroxy group, and a urethane resin having one hydroxy group. In addition, aliphatic alcohols, alkyl alkylene glycols, and the like can also be used. The main chain of the monool compound (D) may be linear or branched. The bonding position of the hydroxy group is not particularly limited, and is preferably present at a terminal of the molecular chain.

Specific examples of the monool compound (D) include aliphatic monools such as methanol, ethanol, propanol, butanol, pentanol, hexanol, heptanol, octanol, nonanol, decanol, lauryl alcohol, myristyl alcohol, pentadecanol, cetyl alcohol, heptadecanol, stearyl alcohol, nonadecanol, and other alkanols (C20 to C50), oleyl alcohol, and isomers thereof;

alicyclic monools such as cyclohexanol, methylcyclohexanol, 4-butylcyclohexanol, 4-pentylcyclohexanol, 4-hexylcyclohexanol, cyclodecanol, cyclododecanol, cyclopentadecanol, 4-isopropylcyclohexanol, 3,5,5-trimethylcyclohexanol, menthol, 2-norbornanol, borneol, 2-adamantanol, dicyclohexylmethanol, cyclodecanol, 2-cyclohexylcyclohexanol, 4-cyclohexylcyclohexanol, 4-(4-propylcyclohexyl)cyclohexanol, 4-(4-pentylcyclohexyl)cyclohexanol, $\alpha$-ambri-nol, deoxycorticosterone, 11-dehydrocorticosterone, cholesterol, $\beta$-sitosterol, campesterol, stigmasterol, brassi-cassterol, lanosterol, ergosterol, $\beta$-cholestanol, testosterone, estron, digitoxigenin, dehydroepiandrosterone, coprostanol, pregnenolone, epicholestanol, 7-dehydrocholesterol, estradiol benzoate, tigogenin, hecogenin, methanedienone, cortisone acetate, stenolone, and isomers thereof;
aromatic aliphatic monools such as benzyl alcohol; and
polyoxyalkylene monools obtained by ring-opening addition polymerization of alkylene oxides such as ethylene oxide, propylene oxide, butylene oxide, and tetrahydrofuran using an alkyl compound containing one active hydrogen as an initiator.

When the two-component curable adhesive of the present invention is used as a solventless adhesive, the viscosity of the polyol composition (Y) is adjusted to a range suitable for the non-solvent lamination method. As an example, the viscosity at 40°C is adjusted to be in a range of 100 mPas to 50000 mPas, more preferably 100 mPas to 20000 mPas. The viscosity of the polyol composition (Y) can be adjusted by the skeleton of the polyol compound (B), the plasticizer described below, and the like. When the viscosity is adjusted by the skeleton of the polyol compound (B), the viscosity can be reduced by using, for example, a polypropylene glycol or a polyester polyol obtained by a reaction between an aliphatic carboxylic acid and a polyol. Alternatively, the viscosity can be increased by using a polyester polyol obtained by a reaction between an aromatic carboxylic acid and a polyol.

(Other Components of Adhesive)

The two-component curable adhesive of the present invention may contain components other than the above-described components. The other components may be contained in either or both of the polyisocyanate composition (X) and the polyol composition (Y), or may be prepared separately from them and mixed with the polyisocyanate composition (X) and the polyol composition (Y) immediately before the application of the adhesive. Hereinafter, each component will be described.

(Catalyst)

Examples of the catalyst include a metal-based catalyst, an amine-based catalyst, an aliphatic cyclic amide compound, and a quaternary ammonium salt.

Examples of the metal-based catalyst include metal complex-based, inorganic metal-based, and organic metal-based catalysts. Examples of the metal complex-based catalyst include acetylacetonate salts of metals selected from the group consisting of Fe (iron), Mn (manganese), Cu (copper), Zr (zirconium), Th (thorium), Ti (titanium), Al (aluminum), and Co (cobalt), such as iron acetylacetonate, manganese acetylacetonate, copper acetylacetonate, and zirconia acetylacetonate.

Examples of the inorganic metal-based catalyst include those selected from Sn, Fe, Mn, Cu, Zr, Th, Ti, Al, and Co.

Examples of the organometallic catalyst include organic zinc compounds such as zinc octylate, zinc neodecanoate, and zinc naphthenate, organotin compounds such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride, organonickel compounds such as nickel octylate and nickel naphthenate, organic cobalt compounds such as cobalt octylate and cobalt naphthenate, organobismuth compounds such as bismuth octoate, bismuth neodecanoate, and bismuth naphthenate, and titanium compounds such as titanium chelate complexes having, as a ligand, at least one of tetraisopropyloxytitanate, dibutyltitanium dichloride, tetrabutyltitanate, butoxytitanium trichloride, aliphatic diketones, aromatic diketones, and alcohols having 2 to 10 carbon atoms.

Examples of the amine-based catalyst include triethylenediamine, 2-methyltriethylenediamine, quinuclidine, 2-methylquinuclidine, N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylhexamethylenediamine, bis(2-dimethylaminoethyl)ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicyclo [5.4.0]undecene-7, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole.

Examples of the aliphatic cyclic amide compound include δ-valerolactam, ε-caprolactam, ω-enantholactam, η-capryllactam, and β-propiolactam. Among these, ε-caprolactam is more effective for accelerating curing.

Examples of the quaternary ammonium salt include hydroxy salts, alkyl acid salts, and halide salts of alkylammonium and aromatic ammonium. Examples thereof include, but are not limited to, tetramethylammonium hydroxide, tetraethylammonium hydroxide, tetrapropylammonium hydroxide, tetrabutylammonium hydroxide, benzyltrimethylammonium hydroxide, tetrabutylammonium fluoride, tetrabutylammonium chloride, tetrabutylammonium bromide, tetrabutylammonium iodide, benzyltriethylammonium chloride, and hexadecyltrimethylammonium bromide.

(Acid Anhydride)

Examples of the acid anhydride include a cyclic aliphatic acid anhydride, an aromatic acid anhydride, and an unsaturated carboxylic acid anhydride, and these can be used alone or in combination of two or more kinds thereof. More specific examples of the acid anhydride include maleic anhydride, phthalic anhydride, trimellitic anhydride, pyromellitic anhydride, benzophenonetetracarboxylic anhydride, dodecenylsuccinic anhydride, polyadipic anhydride, polyazelaic anhydride, polysebacic anhydride, poly(ethyloctadecanedioic) anhydride, poly(phenylhexadecanedioic) anhydride, tetrahydrophthalic anhydride, methyltetrahydrophthalic anhydride, methylhexahydrophthalic anhydride, hexahydrophthalic anhydride, methylhimic anhydride, trialkyltetrahydrophthalic anhydride, methylcyclohexene dicarboxylic anhydride, methylcyclohexene tetracarboxylic anhydride, ethylene glycol bistrimellitate dianhydride, HET anhydride, nadic anhydride, methylnadic anhydride, 5-(2,5-dioxotetrahydro-3-furanyl)-3-methyl-3-cyclohexane-1,2-dicarboxylic anhydride, 3,4-dicarboxy-1,2,3,4-tetrahydro-1-naphthalene succinic dianhydride, and 1-methyl-dicarboxy-1,2,3,4-tetrahydro-1-naphthalenesuccinic dianhydride.

In addition, as the acid anhydride, a compound obtained by modifying the above-described compound with a glycol may be used. Examples of the glycol that can be used for modification include: alkylene glycols such as ethylene glycol, propylene glycol, and neopentyl glycol; and polyether glycols such as polyethylene glycol, polypropylene glycol, and polytetramethylene ether glycol. Furthermore, a copolymerized polyether glycol of two or more of these glycols and/or polyether glycols can also be used.

Alternatively, a homopolymer or a copolymer of a compound having a polymerizable unsaturated group, such as a maleic anhydride among the compounds described above, may be used as the acid anhydride (B). Examples of the compound copolymerizable with the compound having an acid anhydride group and a polymerizable unsaturated group include α-olefins such as ethylene, propylene, 1,3-butadiene, and cyclopentylethylene; vinyl compounds having an aromatic ring such as styrene, 1-ethynyl-4-methylbenzene, divinylbenzene, 1-ethynyl-4-methylethylbenzene, benzonitrile, acrylonitrile, ptert-butylstyrene, 4-vinylbiphenyl, 4-ethynylbenzyl alcohol, 2-ethynylnaphthalene, and phenanthrene-9-ethynyl; and fluoroolefins such as vinylidene fluoride, tetrafluoroethylene, hexafluoropropylene, and chlorotrifluoroethylene. One kind alone or a combination of two or more kinds thereof may be used. Styrene and p-tert-butylstyrene, which are vinyl compounds having an aromatic ring, are preferably used.

(Coupling Agent)

Examples of the coupling agent include a silane coupling agent, a titanate-based coupling agent, and an aluminum-based coupling agent.

Examples of the silane coupling agent include aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, N-phenyl-γ-aminopropyltrimethoxysilane, bis[3-(trimethoxysilyl)propyl]amine, and bis[3-(triethoxysilyl) propyl]amine; epoxysilanes such as β-(3,4-epoxycyclohexyl)ethyltrimethoxysilane, γ-glycidoxypropyltrimethoxysilane, and γ-glycidoxypropyltriethoxysilane; vinylsilanes such as vinyltris(β-methoxyethoxy)silane, vinyltriethoxysilane, vinyltrimethoxysilane, and γ-methacryloxypropyltrimethoxysilane; and hexamethyldisilazane and γ-mercaptopropyltrimethoxysilane.

Examples of the titanate-based coupling agent include tetraisopropoxy titanium, tetra-n-butoxy titanium, butyl titanate dimer, tetrastearyl titanate, titanium acetylacetonate, titanium lactate, tetraoctylene glycol titanate, titanium lactate, and tetrastearoxy titanium.

Examples of the aluminum-based coupling agent include acetoalkoxyaluminum diisopropylate.

(Pigment)

The pigment is not particularly limited, and examples thereof include organic pigments and inorganic pigments such as extender pigments, white pigments, black pigments, gray pigments, red pigments, brown pigments, green pigments, blue pigments, metallic powder pigments, luminescent pigments, and pearlescent pigments, which are described in Handbook of Paint and Coating Raw Materials 1970 (edited by Japan Paint Manufacturers Association), and plastic pigments.

Examples of the extender pigment include precipitated barium sulfate, powdered sugar, precipitated calcium carbonate, calcium bicarbonate, white marble, white alumina, silica, hydrous fine powder silica (white carbon), ultrafine anhydrous silica (Aerosil), silica sand, talc, precipitated magnesium carbonate, bentonite, clay, kaolin, and ocher.

Specific examples of the organic pigments include various insoluble azo pigments such as Benzidine Yellow, Hansa Yellow, and Lake Red 4R; soluble azo pigments such as Lake Red C, Carmine 6B, and Bordeaux 10; various (copper) phthalocyanine-based pigments such as phthalocyanine blue and phthalocyanine green; various chlorine-dyeing lakes such as Rhodamine Lake and Methyl Violet Lake; various mordant dye-based pigments such as Quinoline Lake and Fast Sky Blue; various vat dye-based pigments such as anthraquinone-based pigments, Thioindigo-based pigments, and Perinone-based pigments; various quinacridone-based pigments such as Cinquasia Red B; various dioxazine-based pigments such as Dioxazine Violet; various condensed azo pigments such as Cromophtal; and aniline black.

Examples of the inorganic pigments include various chromates such as chrome yellow, zinc chromate, and molybdate orange; various ferrocyanide compounds such as Prussian blue; various metal oxides such as titanium oxide, zinc white, mapico yellow, iron oxide, red iron oxide, chromium oxide green, and zirconium oxide; various sulfides or selenides such as cadmium yellow, cadmium red, and mercury sulfide; various sulfates such as barium sulfate and lead sulfate; various silicates such as calcium silicate and ultramarine blue; various carbonates such as calcium carbonate and magnesium carbonate; various phosphates such as cobalt violet and manganese violet; various metal powder pigments such as aluminum powder, gold powder, silver powder, copper powder, bronze powder, and brass powder; flake pigments and mica flake pigments of these metals; metallic pigments and pearl pigments such as mica flake pigments in a form of being coated with metal oxides and mica-like iron oxide pigments; and graphite and carbon black.

Examples of the plastic pigments include "Grandol PP-1000" and "PP-2000S" manufactured by DIC Corporation.

The pigment to be used may be appropriately selected according to the purpose, but, for example, an inorganic oxide such as titanium oxide or zinc white is preferably used as the white pigment, and carbon black is preferably used as the black pigment in terms of excellent durability, weather resistance, and design properties.

The blending amount of the pigment is, for example, 1 part by mass to 400 parts by mass with respect to 100 parts by mass of the total nonvolatile content of the polyol composition (X) and the polyisocyanate composition (Y), and is more preferably 10 parts by mass to 300 parts by mass in order to further improve adhesion and blocking resistance.

(Plasticizer)

Examples of the plasticizer include phthalic acid-based plasticizers, fatty acid-based plasticizers, aromatic polycarboxylic acid-based plasticizers, phosphoric acid-based plasticizers, polyol-based plasticizers, epoxy-based plasticizers, polyester-based plasticizers, and carbonate-based plasticizers.

Examples of the phthalic acid-based plasticizer include phthalate ester plasticizers such as dimethyl phthalate, diethyl phthalate, dibutyl phthalate, diisobutyl phthalate, dihexyl phthalate, diheptyl phthalate, di-(2-ethylhexyl)phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzyl phthalate, butyl benzyl phthalate, dicyclohexyl phthalate, octyldecyl phthalate, dimethyl isophthalate, di-(2-ethylhexyl)isophthalate, and diisooctyl isophthalate; and tetrahydrophthalic acid ester-based plasticizers such as di-(2-ethylhexyl)tetrahydrophthalate, di-n-octyltetrahydrophthalate, and diisodecyltetrahydrophthalate.

Examples of the fatty acid-based plasticizer include: adipic acid-based plasticizers such as di-n-butyl adipate, di-(2-ethylhexyl )adipate, diisodecyl adipate, diisononyl adipate, di(C6-C10 alkyl) adipate, and dibutyl diglycol adipate; azelaic acid-based plasticizers such as di-n-hexyl azelate, di-(2-ethylhexyl) azelate, and diisooctyl azelate; sebacic acid-based plasticizers such as di-n-butyl sebacate, di-(2-ethylhexyl) sebacate, and diisononyl sebacate; maleic acid-based plasticizers such as dimethyl maleate, diethyl maleate, di-n-butyl maleate, and di-(2-ethylhexyl) maleate; fumaric acid-based plasticizers such as di-n-butyl fumarate and di-(2-ethylhexyl) fumarate; itaconic acid-based plasticizers such as monomethyl itaconate, monobutyl itaconate, dimethyl itaconate, diethyl itaconate, dibutyl itaconate, and di-(2-ethylhexyl) itaconate; stearic acid-based plasticizers such as n-butyl stearate, glycerin monostearate, and diethylene glycol distearate; oleic acid-based plasticizers such as butyl oleate, glyceryl monooleate, and diethylene glycol monooleate; citric acid-based plasticizers such as triethyl citrate, tri-n-butyl citrate, acetyl triethyl citrate, acetyl tributyl citrate, and acetyl tri-(2-ethylhexyl) citrate; ricinoleic acid-based plasticizers such as methyl acetylricinoleate, butyl acetylricinoleate, glyceryl monoricinoleate, and diethylene glycol monoricinoleate; and other fatty acid-based plasticizers such as diethylene glycol monolaurate, diethylene glycol dipelargonate, and pentaerythritol fatty acid esters.

Examples of the aromatic polycarboxylic acid-based plasticizer include trimellitic acid-based plasticizers such as tri-n-hexyl trimellitate, tri-(2-ethylhexyl) trimellitate, tri-n-octyl trimellitate, triisooctyl trimellitate, triisononyl trimellitate, tridecyl trimellitate, and triisodecyl trimellitate; and pyromellitic acid-based plasticizers such as tetra-(2-ethylhexyl) pyromellitate and tetra-n-octyl pyromellitate.

Examples of the phosphoric acid-based plasticizer include triethyl phosphate, tributyl phosphate, tri-(2-ethylhexyl) phosphate, tributoxyethyl phosphate, triphenyl phosphate, octyl diphenyl phosphate, cresyl diphenyl phosphate, cresyl phenyl phosphate, tricresyl phosphate, trixylenyl phosphate, tris(chloroethyl) phosphate, tris(chloropropyl) phosphate, tris(dichloropropyl) phosphate, and tris(isopropylphenyl) phosphate.

Examples of the polyol-based plasticizer include glycol-based plasticizers such as diethylene glycol dibenzoate, dipropylene glycol dibenzoate, triethylene glycol dibenzoate, triethylene glycol di(2-ethylbutyrate), triethylene glycol di(2-ethylhexoate), and dibutylmethylene bisthioglycolate; and glycerin-based plasticizers such as glycerol monoacetate, glycerol triacetate, and glycerol tributyrate.

Examples of the epoxy-based plasticizer include epoxidized soybean oil, epoxy butyl stearate, epoxy di-2-ethylhexyl hexahydrophthalate, epoxy diisodecyl hexahydrophthalate, epoxy triglyceride, epoxidized octyl oleate, and epoxidized decyl oleate.

Examples of the polyester-based plasticizer include an adipic acid-based polyester, a sebacic acid-based polyester, and a phthalic acid-based polyester.

Examples of the carbonate-based plasticizer include propylene carbonate and ethylene carbonate.

In addition, other examples of the plasticizer include a partially hydrogenated terphenyl, an adhesive plasticizer, and a polymerizable plasticizer such as diallyl phthalate, an acrylic monomer, and an oligomer. These plasticizers can be used alone or in combination of two or more kinds thereof.

(Phosphoric Acid Compound)

Examples of the phosphoric acid compound include phosphoric acid, pyrophosphoric acid, triphosphoric acid, methyl acid phosphate, ethyl acid phosphate, butyl acid phosphate, dibutyl phosphate, 2-ethylhexyl acid phosphate, bis(2-ethylhexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphoric acid.

(Form of Adhesive)

The two-component curable adhesive of the present invention may be either a solvent-type adhesive or a solventless adhesive. Note that in the present description, the "solvent type" adhesive refers to a form used in a method of applying an adhesive to a base material, then heating the adhesive in an oven or the like to volatilize an organic solvent in a coating film, and then bonding the base material to another base material, that is, a so-called dry lamination method. One or both of the polyisocyanate composition (X) and the polyol composition (Y) contain an organic solvent capable of dissolving (diluting) the constituent components of the polyisocyanate composition (X) and the polyol composition (Y) used in the present invention.

Examples of the organic solvent include: esters such as ethyl acetate, butyl acetate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride; and dimethyl sulfoxide and dimethyl sulfoamide. The organic solvent used as a reaction medium during the production of the constituent components of the polyisocyanate composition (X) and the polyol composition (Y) may be further used as a diluent during coating.

In the present description, the "solventless" adhesive refers to a form of an adhesive used in a so-called non-solvent lamination method, that is a method in which the polyisocyanate composition (X) and the polyol composition (Y) substantially do not contain a highly soluble organic solvent, in particular, ethyl acetate or methyl ethyl ketone, such as esters such as ethyl acetate, butyl acetate, and cellosolve acetate, ketones such as acetone, methyl ethyl ketone, isobutyl ketone, and cyclohexanone; ethers such as tetrahydrofuran, and dioxane, aromatic hydrocarbons such as toluene and xylene, halogenated hydrocarbons such as methylene chloride and ethylene chloride, and dimethyl sulfoxide and dimethyl sulfamide, and the adhesive is applied to a base material, and then the base material is bonded to another base material without a step of volatilizing the solvent by heating in an oven or the like. When the constituent components of the polyisocyanate composition (X) or the polyol composition (Y) and the organic solvent used as the reaction medium during the production of the raw materials thereof are not completely removed, and a small amount of the organic solvent remains in the polyisocyanate composition (X) or the polyol composition (Y), it is understood that the polyisocyanate composition (X) or the polyol composition (Y) does not substantially contain the organic solvent. In addition, when the polyol composition (Y) contains a low-molecular-weight alcohol, the low-molecular-weight alcohol reacts with the polyisocyanate composition (X) to form a part of the coating film. Therefore, it is not necessary to volatilize the low-molecular-weight alcohol after coating. Therefore, such a form is also treated as a solventless adhesive, and a low-molecular-weight alcohol is not regarded as an organic solvent.

The two-component curable adhesive of the present invention is preferably blended and used such that the ratio [NCO]/[OH] of the number of moles [NCO] of isocyanate groups contained in the polyisocyanate composition (X) to the number of moles [OH] of hydroxy groups contained in the polyol composition (Y) is 0.5 to 5.0, and more preferably 1.0 to 3.0. Accordingly, appropriate curability can be obtained without depending on the environmental humidity during coating.

<Laminate>

The laminate of the present invention is obtained by, for example, a method including a two-liquid mixing step of mixing the polyisocyanate composition (X) and the polyol composition (Y) in advance, then applying the mixture to a first base material, then laminating a second base material on the application surface, and curing an adhesive layer, or a method including a two-liquid separate coating step of respectively applying the polyisocyanate composition (X) and the polyol composition (Y) to the first base material and the second base material, then bringing the application surfaces into contact with each other and pressure bonding to laminate the first base material and the second base material, and curing the adhesive layer. The film to be used is not particularly limited, and a film can be appropriately selected according to the application.

Examples of the film for food packaging include a polyethylene terephthalate (PET) film, a polystyrene film, a polyamide film, a polyacrylonitrile film, a polyethylene film (LLDPE: low-density polyethylene film, HDPE: high-density polyethylene film, MDOPE: uniaxially oriented polyethylene film, OPE: biaxially oriented polyethylene film), a polypropylene film (CPP: non-oriented polypropylene film, OPP: biaxially oriented polypropylene film), an ethylene vinyl alcohol copolymer, a polyolefin film such as a gas barrier heat sealable film in which an olefin-based heat sealable resin layer is provided on one surface or both surfaces of a gas barrier resin such as polyvinyl alcohol, a polyvinyl alcohol film, and an ethylene-vinyl alcohol copolymer film.

In addition, it is also preferable to use a biomass film, a biodegradable film, or a recycled plastic film formed of a material containing a biomass-derived component, a biodegradable component, or a recycled component.

The biomass film, the biodegradable film, and the recycled plastic film are commercially available from various companies, and films certified in each country, such as a film sheet listed in a list of certified biomass products described in Japan Organics Recycling Association, a film listed in a list of ECO Mark-certified products described in Japan Environment Association, and a film having a symbol mark defined by Japan Bioplastic Association, can be used.

(Biomass Film)

Specific examples of the well-known biomass film include those using a biomass-derived ethylene glycol as a raw material. The biomass-derived ethylene glycol is obtained by using, as a raw material, ethanol produced using biomass (biomass ethanol) as a raw material. For example, the biomass-derived ethylene glycol can be obtained according to a method of producing ethylene glycol from biomass ethanol via ethylene oxide according to a commonly known method. In addition, a commercially available biomass ethylene glycol may be used, and for example, a biomass ethylene glycol commercially available from India Glycols Limited can be suitably used.

For example, a film containing a biomass polyester containing a biomass-derived ethylene glycol as a diol unit and fossil fuel-derived dicarboxylic acid as a dicarboxylic acid unit, biomass polyethylene terephthalate, or the like is known as a substitute for a polyethylene terephthalate film using a petroleum-based raw material according to the related art.

A dicarboxylic acid derived from a fossil fuel is used as the dicarboxylic acid unit of the biomass polyester. As the dicarboxylic acid, an aromatic dicarboxylic acid, an aliphatic dicarboxylic acid, and derivatives thereof can be used without limitation.

In addition, a copolymerized polyester, which is obtained by adding, to the diol component and the dicarboxylic acid component described above, a copolymerization component as a third component, such as at least one polyfunctional compound selected from the group consisting of a bifunctional oxycarboxylic acid, a tri- or higher functional polyhydric alcohol for forming a crosslinked structure, a tri- or higher functional polycarboxylic acid and/or an anhydride thereof, and a tri- or higher functional oxycarboxylic acid, may be used.

In addition, for example, a biomass polyolefin-based film such as a biomass polyethylene-based film containing a polyethylene-based resin using biomass-derived ethylene glycol as a raw material, and a biomass polyethylene-polypropylene-based film is also known as an alternative to the polyolefin-based film using a petroleum-based raw material in the related art.

The polyethylene-based resin is not particularly limited except that the biomass-derived ethylene glycol is used as a part of the raw material, and examples thereof include a homopolymer of ethylene and a copolymer of ethylene and $\alpha$-olefin which contains ethylene as a main component (ethylene-$\alpha$-olefin copolymer containing 90 mass% or more of an ethylene unit), and these polyethylene-based resins can be used alone or in combination of two or more kinds thereof.

Furthermore, the $\alpha$-olefin constituting the copolymer of ethylene and an $\alpha$-olefin is not particularly limited, and examples thereof include $\alpha$-olefins having 4 to 8 carbon atoms such as 1-butene, 4-methyl-1-pentene, 1-hexene, and 1-octene. Known polyethylene resins such as a low-density polyethylene resin, a medium-density polyethylene resin, and a linear low-density polyethylene resin can be used. Among them, a linear low-density polyethylene resin (LLDPE) (a copolymer of ethylene and 1-hexene or a copolymer of ethylene and 1-octene) is preferable, and a linear low-density polyethylene resin having a density of 0.910 $g/cm^3$ to 0.925 $g/cm^3$ is more preferable, from the viewpoint of further preventing damage such as hole opening or fracture even when films rub against each other.

As the biomass film, a biomass film using a biomass raw material distinguished by a biomass plastic degree defined by ISO16620 or ASTMD6866 is also distributed. In the atmosphere, one radioactive carbon $^{14}C$ is present per 1012 carbons, and this proportion does not change even in carbon dioxide in the atmosphere. Therefore, this proportion does not change among plants in which carbon dioxide is immobilized by photosynthesis. Therefore, the carbon of the plant-derived resin contains the radioactive carbon $^{14}C$. On the other hand, the carbon of the fossil fuel-derived resin contains almost no radioactive carbon $^{14}C$. Therefore, the content ratio of the plant-derived resin in the resin, that is, the biomass plastic degree can be obtained by measuring the concentration of the radioactive carbon $^{14}C$ in the resin with an accelerator mass spectrometer.

Examples of the plant-derived low-density polyethylene which is a biomass plastic having a biomass plastic degree defined by ISO 16620 or ASTM D6866 of 80% or more, preferably 90% or more include trade names "SBC818", "SPB608", "SBF0323HC", "STN7006", "SEB853", and "SPB681" manufactured by Braskem, and films using these as raw materials can be suitably used.

In addition, films and sheets containing starch or polylactic acid as a biomass raw material are also known. These can be appropriately selected and used according to the application.

The biomass film may be a laminate of a plurality of biomass films or a laminate of a petroleum-based film according to the related art and a biomass film. In addition, the biomass film may be an unstretched film or a stretched film, and the production method thereof is not limited.

(Biodegradable Film)

Specific examples of the well-known biodegradable film include those using a generally available biodegradable resin as a raw material. Examples thereof include a polycaprolactone, a polyvinyl alcohol, a polyamide, a cellulose ester, a lactic acid-based polyester-based resin, an aliphatic polyester-based resin, and an aliphatic aromatic polyester-based resin. These biodegradable resins may be used alone or in combination of two or more kinds thereof. Among them, an aliphatic polyester-based resin or an aliphatic aromatic polyester-based resin is preferably used.

Examples of the aliphatic polyester-based resin include an aliphatic polyester obtained by a polycondensation reaction between an aliphatic diol and an aliphatic dicarboxylic acid. Examples of the aliphatic diol include ethylene glycol, 1,3-propanediol, 1,4-butanediol, 1,5-pentanediol, 1,6-hexanediol, 1,4-cyclohexanediol, and 1,4-cyclohexanedimethanol. These aliphatic diols may be used alone, or a mixture thereof may be used. Among them, 1,4-butanediol is preferably used. Examples of the aliphatic dicarboxylic acid include oxalic acid, succinic acid, glutanoic acid, adipic acid, sebacic acid, suberic acid, and dodecanedioic acid, and acid anhydrides which are derivatives thereof may be used. Among them, succinic acid, succinic anhydride, or a mixture thereof with adipic acid is preferable.

Specific examples thereof include polybutylene succinate (PBS) obtained from 1,4-butanediol and succinic acid (for example, BioPBS manufactured by PPT MCC Biochem) and polybutylene succinate adipate (PBSA) obtained by copolymerizing adipic acid with PBS.

Examples of the aliphatic aromatic polyester-based resin include a copolymer containing an aliphatic dicarboxylic acid unit, an aromatic dicarboxylic acid unit, and a chain aliphatic and/or alicyclic diol unit. The diol component that provides the diol unit generally has 2 to 10 carbon atoms, and examples thereof include ethylene glycol, 1,3-propanediol, 1,4-butanediol, and 1,4-cyclohexanedimethanol. Among these, a diol having 2 to 4 carbon atoms is preferable, ethylene glycol and 1,4-butanediol are preferable, and 1,4-butanediol is more preferable. The dicarboxylic acid component that provides a dicarboxylic acid unit generally has 2 to 10 carbon atoms, and examples thereof include succinic acid, adipic acid, suberic acid, sebacic acid, and dodecanedioic acid. Among these, succinic acid or adipic acid is preferable. Examples of the aromatic dicarboxylic acid component that provides the aromatic dicarboxylic acid unit include terephthalic acid, isophthalic acid, and naphthalenedicarboxylic acid. Among these, terephthalic acid and isophthalic acid are preferable, and terephthalic acid is more preferable.

Specific examples thereof include PBAT which is a copolymer of 1,4-butanediol, adipic acid, and terephthalic acid (for example, Ecoflex manufactured by BASF Corporation).

Other examples include poly(3-hydroxyalkanoate) that is an aliphatic polyester copolymer obtained from a hydroxyalkanoic acid and a polycarboxylic acid (among them, poly(3-hydroxybutyrate-co-3-hydroxyhexanoate) (PHBH) (for example, AONILEX manufactured by Kaneka Corporation), and polylactic acid (PLA) (for example, REVODE manufactured by Zhejiang Hisun Biomaterials Co., Ltd., Ingeo manufactured by Nature Works Co., Ltd.).

The biodegradable film may be a laminate obtained by laminating a plurality of biodegradable films, or may be a laminate of a petroleum-based film according to the related art and a biodegradable film. In addition, the biodegradable film may be an unstretched film or a stretched film, and the production method thereof is not limited.

The film may be subjected to a stretching treatment. As a stretching treatment method, a resin is melt-extruded into a sheet shape according to an extrusion film forming method or the like, and then is subjected to simultaneous biaxial stretching or sequential biaxial stretching. In addition, in the case of the sequential biaxial stretching, generally, it is common to first perform longitudinal stretching treatment and then transverse stretching. Specifically, a method of combining longitudinal stretching utilizing a difference in speed between rolls and transverse stretching using a tenter is often used.

A film surface may be subjected to various surface treatments such as a flame treatment and a corona discharge treatment as necessary, so as to form an adhesive layer without defects such as film breakage and repelling.

Alternatively, a film obtained by laminating a vapor-deposited layer of a metal such as aluminum, silica, or a metal oxide of alumina or the like, or a barrier film containing a gas barrier layer of polyvinyl alcohol, an ethylene-vinyl alcohol copolymer, vinylidene chloride, or the like may be used in combination. When such a film is used, a laminate having barrier properties against water vapor, oxygen, alcohol, inert gas, volatile organic substances (scent), and the like can be obtained.

The paper is not particularly limited, and a known paper base material can be used. Specifically, the paper is produced using natural fibers for papermaking such as wood pulp with a known papermaking machine, and the papermaking conditions are not particularly specified. Examples of the natural fiber for papermaking include wood pulp such as softwood pulp and hardwood pulp, non-wood pulp such as Manila hemp pulp, sisal hemp pulp, and flax pulp, and pulp obtained by chemically modifying these pulps. As the type of pulp, chemical pulp produced by a sulfate cooking method, an acidic/neutral/alkaline sulfite cooking method, a soda cooking method, or the like, ground pulp, chemi-ground pulp, thermomechanical pulp, or the like can be used. In addition, commercially available high-quality paper, coated paper, backing paper, impregnated paper, cardboard, paperboard, and the like can also be used.

Examples of a more specific configuration of the laminate include

(1) base material 1/adhesive layer 1/sealant film;
(2) base material 1/adhesive layer 1/metal-deposited unstretched film;

(3) base material 1/adhesive layer 1/metal-deposited stretched film;

(4) transparent vapor-deposited stretched film/adhesive layer 1/sealant film;

(5) base material 1/adhesive layer 1/base material 2/adhesive layer 2/sealant film;

(6) base material 1/adhesive layer 1/metal-deposited stretched film/adhesive layer 2/sealant film;

(7) base material 1/adhesive layer 1/transparent vapor-deposited stretched film/adhesive layer 2/sealant film;

(8) base material 1/adhesive layer 1/metal layer/adhesive layer 2/sealant film;

(9) base material 1/adhesive layer 1/base material 2/adhesive layer 2/metal layer/adhesive layer 3/sealant film; and

(10) base material 1/adhesive layer 1/metal layer/adhesive layer 2/base material 2/adhesive layer 3/sealant film, and

the present invention is not limited thereto.

Examples of the base material 1 used in the configuration (1) include an MDOPE film, an OPE film, an OPP film, a PET film, a nylon film, and paper. In addition, as the base material 1, a base material on which a coating is applied for the purpose of improving gas barrier properties, ink receptivity when providing a printing layer described below, and the like may be used. Examples of a commercially available product of the base material film 1 subjected to coating include a K-OPP film, a K-PET film, and a K-nylon film. The adhesive layer 1 is a cured coating film of the adhesive of the present invention. Examples of the sealant film include a CPP film, an LLDPE film, an easily openable heat-sealable film, and a gas barrier heat-sealable film. A printing layer may be provided on a surface of the base material 1 on the adhesive layer 1 side (a surface of the coating layer on the adhesive layer 1 side in a case where the base material film 1 subjected to coating is used) or the surface opposite to the adhesive layer 1. The printing layer is formed of various printing inks such as gravure ink, flexographic ink, offset ink, stencil ink, and inkjet ink according to a general printing method commonly used for printing on a polymer film or paper.

Examples of the base material 1 used in the configurations (2) and (3) include an MDOPE film, an OPE film, an OPP film, a PET film, and paper. The adhesive layer 1 is a cured coating film of the adhesive of the present invention. Examples of the metal-deposited unstretched film include a VM-CPP film and a VM-LLDPE film obtained by depositing a metal such as aluminum on a CPP film, an LLDPE film, or a gas barrier heat-sealable film. Examples of the metal-deposited stretched film include a VM-MDOPE film, a VM-OPE film, and a VM-OPP film obtained by depositing a metal such as aluminum on an MDOPE film, an OPE film, and an OPP film. Similarly to the configuration (1), a printing layer may be provided on either surface of the base material 1.

Examples of the transparent vapor-deposited stretched film used in the configuration (4) include a film obtained by vapor-depositing silica or alumina on an MDOPE film, an OPE film, an OPP film, a PET film, a nylon film, or the like. For the purpose of protecting the inorganic vapor-deposited layer of silica or alumina and the like, a film in which a coating is applied on the vapor-deposited layer may be used. The adhesive layer 1 is a cured coating film of the adhesive of the present invention. Examples of the sealant film are the same as those in the configuration (1). A printing layer may be provided on a surface of the transparent vapor-deposited stretched film on the adhesive layer 1 side (a surface of the coating layer on the adhesive layer 1 side in a case where a coating is applied on the inorganic vapor-deposited layer is used). A method of forming the printing layer is the same as that of the configuration (1).

Examples of the base material 1 used in the configuration (5) include a PET film and paper. Examples of the base material 2 include a nylon film. At least one of the adhesive layer 1 and the adhesive layer 2 is a cured coating film of the adhesive of the present invention. Examples of the sealant film are the same as those in the configuration (1). Similarly to the configuration (1), a printing layer may be provided on either surface of the base material 1.

Examples of the base material 1 in the configuration (6) are the same as those of the configurations (2) and (3). Examples of the metal-deposited stretched film include a VM-MDOPE film, a VM-OPE film, a VM-OPP film, and a VM-PET film obtained by depositing a metal such as aluminum on an MDOPE film, an OPE film, an OPP film, and a PET film. At least one of the adhesive layer 1 and the adhesive layer 2 is a cured coating film of the adhesive of the present invention. Examples of the sealant film are the same as those in the configuration (1). Similarly to the configuration (1), a printing layer may be provided on either surface of the base material 1.

Examples of the base material 1 in the configuration (7) include a PET film and paper. Examples of the transparent vapor-deposited stretched film are the same as those in the configuration (4). At least one of the adhesive layers 1 and 2 is a cured coating film of the adhesive of the present invention. Examples of the sealant film are the same as those in the configuration (1). Similarly to the configuration (1), a printing layer may be provided on either surface of the base material 1.

Examples of the base material 1 in the configuration (8) include a PET film and paper. Examples of the metal layer include an aluminum foil. At least one of the adhesive layers 1 and 2 is a cured coating film of the adhesive of the present invention. Examples of the sealant film are the same as those in the configuration (1). Similarly to the configuration (1), a printing layer may be provided on either surface of the base material 1.

Examples of the base material 1 in the configurations (9) and (10) include a PET film and paper. Examples of the base material 2 include a nylon film. Examples of the metal layer include an aluminum foil. At least one of the adhesive layers 1, 2, and 3 is a cured coating film of the adhesive of the present invention. Examples of the sealant film are the same as those in the configuration (1). Similarly to the configuration (1), a printing layer may be provided on either surface of the base material 1.

When the laminate of the present invention includes at least one of a metal-deposited film, a transparent vapor-deposited film, and a metal layer, an adhesive layer in contact with the metal-deposited layer, the transparent vapor-deposited layer, and the metal layer is preferably a cured coating film of the adhesive of the present invention.

When the adhesive of the present invention is used as an adhesion assisting agent, the adhesion assisting agent of the present invention is applied to a film material serving as a base material using a roll such as a gravure roll, an organic solvent is volatilized by heating with an oven or the like, and then the polymer material melted by an extruder is laminated to obtain the laminate of the present invention.

The laminate of the present invention may further include other films and base materials in addition to the configurations (1) to (10) described above. As other base materials, in addition to the stretched film, the unstretched film, and the transparent vapor-deposited film described above, a porous base material such as paper, wood, and leather described below can also be used. An adhesive used for bonding other base materials may or may not be the adhesive of the present invention.

The "other layers" may contain a known additive or stabilizer, for example, an antistatic agent, an easy-adhesion coating agent, a plasticizer, a lubricant, or an antioxidant. In addition, the "other layers" may be a layer obtained by subjecting the surface of the film to a corona treatment, a plasma treatment, an ozone treatment, a chemical treatment, a solvent treatment, or the like as a pretreatment in order to improve adhesion when laminated with other materials.

The laminate of the present invention can be suitably used in various applications, for example, packaging materials for foods, pharmaceuticals, and daily necessities, lid materials, paper tableware such as a paper straw, a paper napkin, a paper spoon, a paper plate, and a paper cup, outdoor industrial applications such as wall protection materials, roofing materials, solar cell panel materials, battery packaging materials, window materials, outdoor flooring materials, lighting protection materials, automobile members, signboards, and stickers, decorative sheets used in injection molding simultaneous decorating methods and the like, and packaging materials for a liquid laundry detergent, a liquid kitchen detergent, a liquid bath detergent, a liquid bath soap, a liquid shampoo, a liquid conditioner, and the like.

<Packaging Material>

The laminate of the present invention can be used as a multilayer packaging material for the purpose of protecting foods, pharmaceuticals, and the like. When the laminate is used as a multilayer packaging material, the layer configuration of the laminate may change depending on the contents, the use environment, and the use form. In addition, the packaging body of the present invention may be appropriately provided with an easy-opening treatment or a resealing unit.

As an example of a specific aspect of the packaging material of the present invention, a packaging material obtained by making a laminate having a sealant film, such as Configuration Examples (1) and (4) to (10) of the laminate described above, into a bag, is exemplified. The laminate is folded or overlapped so that the surfaces of the inner layers thereof (the surfaces of the sealant films) face each other, and the peripheral end portions thereof are heat-sealed to form a bag shape. Examples of the bag forming method include a method of heat-sealing in the form of a side surface seal type, a two-side seal type, a three-side seal type, a four-side seal type, an envelope seal type, a gassho seal type, a pleated seal type, a flat bottom seal type, a square bottom seal type, a gusset type, and other heat seal types. The packaging material of the present invention can take various forms depending on the contents, the use environment, and the use form. A self-supporting packaging material (standing pouch) or the like can also be used. Examples of the heat sealing method include known methods such as bar sealing, rotary roll sealing, belt sealing, impulse sealing, highfrequency sealing, and ultrasonic sealing.

A product using the packaging material of the present invention is produced by filling a packaging material of the present invention with contents through an opening and then heat-sealing the opening. Examples of the contents to be filled include foods, for example, confections such as rice crackers, bean snacks, nuts, biscuits, cookies, wafers, marshmallows, pies, soft-baked cakes, candies, and snacks, staple foods such as breads, snack noodles, instant noodles, dried noodles, pasta, aseptically packaged cooked rice, Japanese rice porridge, rice porridge, packaged rice cakes, and cereal foods, agricultural products such as pickles, boiled beans, natto, miso, frozen tofu, tofu, nametake mushrooms, konjac, processed wild vegetables, jams, peanut creams, salads, frozen vegetables, and processed potatoes, processed livestock products such as hams, bacons, sausages, processed chicken products, and corned beef, processed seafood products such as fish ham and sausages, fish paste products, kamaboko, seaweed, tsukudani, bonito flakes, salted fish, smoked salmon, and spicy mentaiko, fruit pulps such as peaches, mandarins, pineapples, apples, pears, and cherries, vegetables such as corns, asparagus, mushrooms, onions, carrots, radishes, and potatoes, prepared foods such as frozen and chilled prepared foods, including hamburgers, meatballs, fried seafood, gyozas, and croquettes, dairy products such as butter, margarine, cheese, creams, instant cream powders, and infant formula, liquid seasonings, instant curry, and pet foods.

Various packaging materials can also be used for non-foods, and examples of the non-foods include tobacco, disposable body warmers, pharmaceuticals such as infusion packs, liquid laundry detergents, liquid kitchen detergents, liquid bath detergents, liquid bath soaps, liquid shampoos, liquid conditioners, cosmetics such as lotions and emulsions, vacuum insulating materials, and batteries.

EXAMPLES

Hereinafter, the present invention will be described in more detail with reference to specific synthesis examples and examples, but the present invention is not limited to these examples. Note that in the following examples, "parts" and "%" represent "parts by mass" and "mass%", respectively, unless otherwise specified.

<Polyurethane Polyisocyanate (A1)>

(Example 1)

(Polyurethane Polyisocyanate (A1-1))

(Step (1))

Under a nitrogen stream, 827.59 g of tolylene diisocyanate (TDI), 0.22 mg of sodium hydroxide, 0.029 mg of magnesium hydroxide, 327.59 g of a bifunctional polypropylene glycol having a molecular weight of 400 (EXCENOL 420 manufactured by AGC Inc.) (hereinafter, referred to as PPG400D), and 327.59 g of a bifunctional polypropylene glycol having a molecular weight of 2000 (VORANOL 2120 manufactured by DOW) (hereinafter, referred to as PPG2000D) continuously reacted at 80°C until NCO% did not change, thereby obtaining a composition containing a polyurethane polyisocyanate (A1-1) and unreacted TDI.

(Step (2))

The obtained composition was transferred to a thin film distillation apparatus and purified under conditions of a pressure of about 0.02 Torr and a temperature of 160°C until the TDI in the composition reached 0.05 mass% to obtain a polyisocyanate composition (X-1). The calculated sodium atom content was 125 ppb of the polyurethane polyisocyanate (A1-1), the magnesium atom content was 12 ppb, and the mass ratio Na/Mg of both atoms was 10.4.

(Example 2) to (Example 12)

(Polyurethane Polyisocyanates (A1-2) to (A1-12))

Polyurethane polyisocyanates (A1-2) to (A1-12) were obtained in the same manner as in the preparation of the polyurethane polyisocyanate (A1-1) except that the raw materials, the sodium content, and the magnesium content were changed to those shown in Tables 1 and 2.

(Comparative Example 1) to (Comparative Example 12)

(Polyurethane Polyisocyanate (A1'-1) to (A1'-12))

Polyurethane polyisocyanates (A1'-1) to (A1'-12) were obtained in the same manner as in the preparation of the polyurethane polyisocyanate (A1-1) except that the raw materials, the sodium content, and the magnesium content were changed to those shown in Tables 3 and 4.
Note that the details of the compounds in Tables 1 to 4 are as follows.
TDI: tolylene diisocyanate
HDI: hexamethylene diisocyanate
MDI50: diphenylmethane diisocyanate (a mixture of 4,4'-MDI- and 2,4'-MDI isomers)
PPG400D: bifunctional polypropylene glycol having a molecular weight of 400
PPG1000D: bifunctional polypropylene glycol having a molecular weight of 1000
PPG2000D: bifunctional polypropylene glycol having a molecular weight of 2000
PEG1000D: bifunctional polyethylene glycol having a molecular weight of 1000
NaOH: sodium hydroxide

Mg(OH)$_2$: magnesium hydroxide

[Table 1]

|  | Example 1 | Example 2 | Example 3 | Example 4 | Example 5 | Example 6 |
|---|---|---|---|---|---|---|
|  | (A1-1) | (A1-2) | (A1-3) | (A1-4) | (A1-5) | (A1-6) |
| TDI (g) | 827.59 | 827.59 | 827.59 | 827.59 |  |  |
| HDI (g) |  |  |  |  | 754.72 | 754.72 |
| MDI50 (g) |  |  |  |  |  |  |
| PPG400D (g) | 327.59 | 327.59 | 327.59 | 327.59 | 301.89 | 301.89 |
| PPG1000D (g) |  |  |  |  |  |  |
| PPG2000D (g) | 327.59 | 327.59 | 327.59 | 327.59 |  |  |
| PEG1000D (g) |  |  |  |  | 320.75 | 320.75 |
| NaOH (mg) | 0.22 | 1.19 | 0.20 | 1.20 | 0.19 | 1.21 |
| Mg(OH)$_2$ (mg) | 0.029 | 0.026 | 0.106 | 0.110 | 0.029 | 0.029 |
| Na content (ppb) | 125 | 682 | 113 | 691 | 111 | 697 |
| Mg content (ppb) | 12 | 11 | 44 | 46 | 12 | 12 |
| Na/Mg | 10.4 | 62.0 | 2.6 | 15.0 | 9.3 | 58.1 |
| Residual TDI (mass%) | 0.05 | 0.05 | 0.05 | 0.05 | 0.05 | 0.05 |

[Table 2]

|  | Example 7 | Example 8 | Example 9 | Example 10 | Example 11 | Example 12 |
|---|---|---|---|---|---|---|
|  | (A1-7) | (A1-8) | (A1-9) | (A1-10) | (A1-11) | (A1-12) |
| TDI (g) |  |  |  |  |  |  |
| HDI (g) | 754.72 | 754.72 |  |  |  |  |
| MDI50 (g) |  |  | 437.78 | 437.78 | 437.78 | 437.78 |
| PPG400D (g) | 301.89 | 301.89 |  |  |  |  |
| PPG1000D (g) |  |  | 361.11 | 361.11 | 361.11 | 361.11 |
| PPG2000D (g) |  |  | 361.11 | 361.11 | 361.11 | 361.11 |
| PEG1000D (g) | 320.75 | 320.75 |  |  |  |  |
| NaOH (mg) | 0.19 | 1.20 | 0.20 | 1.21 | 0.20 | 1.18 |
| Mg(OH)$_2$ (mg) | 0.115 | 0.108 | 0.034 | 0.026 | 0.108 | 0.113 |
| Na content (ppb) | 112 | 688 | 114 | 696 | 113 | 679 |
| Mg content (ppb) | 48 | 45 | 14 | 11 | 45 | 47 |
| Na/Mg | 2.3 | 15.3 | 8.1 | 63.3 | 2.5 | 14.4 |
| Residual TDI (mass%) | 0.05 | 0.05 | 0.05 | 0.05 | 0.05 | 0.05 |

[Table 3]

|  | Comparative Example 1 | Comparative Example 2 | Comparative Example 3 | Comparative Example 4 | Comparative Example 5 | Comparative Example 6 |
|---|---|---|---|---|---|---|
|  | (A1'-1) | (A1'-2) | (A1'-3) | (A1'-4) | (A1'-5) | (A1'-6) |
| TDI (g) | 827.59 | 827.59 | 827.59 | 827.59 |  |  |

(continued)

| | Comparative Example 1 | Comparative Example 2 | Comparative Example 3 | Comparative Example 4 | Comparative Example 5 | Comparative Example 6 |
|---|---|---|---|---|---|---|
| | (A1'-1) | (A1'-2) | (A1'-3) | (A1'-4) | (A1'-5) | (A1'-6) |
| HDI (g) | | | | | 754.72 | 754.72 |
| MDI50 (g) | | | | | | |
| PPG400D (g) | 327.59 | 327.59 | 327.59 | 327.59 | 301.89 | 301.89 |
| PPG1000D (g) | | | | | | |
| PPG2000D (g) | 327.59 | 327.59 | 327.59 | 327.59 | | |
| PEG1000D (g) | | | | | 320.75 | 320.75 |
| NaOH (mg) | 0.11 | 1.37 | 0.10 | 1.45 | 0.12 | 1.41 |
| $Mg(OH)_2$ (mg) | 0.001 | 0.001 | 0.192 | 0.221 | 0.001 | 0.001 |
| Na content (ppb) | 65 | 789 | 59 | 835 | 71 | 811 |
| Mg content (ppb) | 0.5 | 0.5 | 80 | 92 | 0.5 | 0.5 |
| Na/Mg | 130.0 | 1578.0 | 0.7 | 9.1 | 142.0 | 1622.0 |
| Residual TDI (mass%) | 0.05 | 0.05 | 0.05 | 0.05 | 0.05 | 0.05 |

[Table 4]

| | Comparative Example 7 | Comparative Example 8 | Comparative Example 9 | Comparative Example 10 | Comparative Example 11 | Comparative Example 12 |
|---|---|---|---|---|---|---|
| | (A1'-7) | (A1'-8) | (A1'-9) | (A1'-10) | (A1'-11) | (A1'-12) |
| TDI (g) | | | | | | |
| HDI (g) | 754.72 | 754.72 | | | | |
| MDI50 (g) | | | 437.78 | 437.78 | 437.78 | 437.78 |
| PPG400D (g) | 301.89 | 301.89 | | | | |
| PPG1000D (g) | | | 361.11 | 361.11 | 361.11 | 361.11 |
| PPG2000D (g) | | | 361.11 | 361.11 | 361.11 | 361.11 |
| PEG1000D (g) | 320.75 | 320.75 | | | | |
| NaOH (mg) | 0.06 | 1.55 | 0.10 | 1.43 | 0.07 | 1.57 |
| $Mg(OH)_2$ (mg) | 0.197 | 0.247 | 0.001 | 0.001 | 0.211 | 0.238 |
| Na content (ppb) | 32 | 890 | 55 | 822 | 41 | 901 |

(continued)

|  | Comparative Example 7 | Comparative Example 8 | Comparative Example 9 | Comparative Example 10 | Comparative Example 11 | Comparative Example 12 |
|---|---|---|---|---|---|---|
|  | (A1'-7) | (A1'-8) | (A1'-9) | (A1'-10) | (A1'-11) | (A1'-12) |
| Mg content (ppb) | 82 | 103 | 0.5 | 0.5 | 88 | 99 |
| Na/Mg | 0.4 | 8.6 | 110.0 | 1644.0 | 0.5 | 9.1 |
| Residual TDI (mass%) | 0.05 | 0.05 | 0.05 | 0.05 | 0.05 | 0.05 |

<Evaluation>

(Reaction Time)

In the synthesis of the polyurethane polyisocyanate (A1) in Examples and Comparative Examples, the time until the step (1) was completed (until the NCO% did not change) was evaluated in three stages according to the following criteria, and the results were summarized in Tables 5 to 8.

    A: shorter than 8 hours
    B: 8 hours or longer and shorter than 10 hours
    C: 10 hours or longer

(Gardner Color)

The composition after completion of the step (1) and the polyurethane polyisocyanate (A1) after completion of the step (2) were separately taken into a test tube made of flat-bottomed colorless hard glass, which has an inner diameter of $10.75\pm0.1$ mm and a length of $112\pm1$ mm, and the Gardner color was measured using TZ-6000 manufactured by Nippon Denshoku Industries Co., Ltd.. Evaluation was performed in four stages according to the following criteria, and the results were summarized in Tables 5 to 8.

    A: less than 3
    B: 3 or more and less than 4
    C: 4 or more and less than 6
    D: 6 or more

(NCO%)

Five grams of a sample was weighed and put in a 300 mL stoppered Erlenmeyer flask that had been dried clean, and 15 mL of dehydrated ethyl acetate was added thereto with a graduated cylinder to dissolve the sample. After complete dissolution, 10 mL of a 1 mol/l di-n-butylamine toluene solution was added with a hole pipette and mixed well, and after leaving at room temperature for 20 minutes or longer, about 30 mL of methanol was added with a graduated cylinder. A bromophenol blue indicator was added in an amount of 7 drops to 8 drops, followed by titrating with a 0.5 mol/l aqueous hydrochloric acid solution, and a point at which the color was changed from purple to yellow was regarded as an end point.

At the same time, a blank test was performed, NCO% (measured value) was calculated by the following formula, and the measured value was rounded to the second decimal place to obtain a measured value.

[Math. 1]

$$\mathrm{NCO\%\ (MEASURED\ VALUE)} = \frac{(\mathrm{B} - \mathrm{T}) \times \mathrm{F} \times 0.5 \times 42.02}{\mathrm{S} \times 1000} \times 100$$

    B: titration amount (mL) of 0.5 mol/l aqueous hydrochloric acid solution required for blank test
    T: titration amount (mL) of 0.5 mol/l aqueous hydrochloric acid solution required for the present test
    F: potency of 0.5 mol/l aqueous hydrochloric acid solution

S: sample collection amount (g)

In addition, from the charged amounts of the isocyanate and the polyol used in the synthesis of the polyurethane polyisocyanate (A1), the NCO% (theoretical value) in a case where it was assumed that an equimolar amount of the isocyanate reacted with the hydroxyl group of the polyol (since the reaction was performed in a system in which an excessive amount of the isocyanate group was present with respect to the hydroxyl group, a reaction in which the polyol formed a urethane bond at a terminal of the isocyanate did not occur) was calculated. The NCO% (measured value) and the NCO% (theoretical value) were compared with each other and evaluated in three stages according to the following evaluation criteria, and the results were summarized in Tables 5 to 8.

A: a difference between the theoretical value and the measured value is less than 0.2%
B: the difference between the theoretical value and the measured value is 0.2% or more and less than 0.4%.
C: the difference between the theoretical value and the measured value is 0.4% or more.

[Table 5]

|  |  | Example 1 | Example 2 | Example 3 | Example 4 | Example 5 | Example 6 |
|---|---|---|---|---|---|---|---|
| Reaction time |  | A | A | A | A | B | B |
| Gardner color | Step (1) | A | A | A | A | A | A |
|  | Step (2) | A | A | A | A | A | A |
| NCO% | Step (1) | A | B | A | B | A | B |
|  | Step (2) | A | B | A | B | A | B |

[Table 6]

|  |  | Example 7 | Example 8 | Example 9 | Example 10 | Example 11 | Example 12 |
|---|---|---|---|---|---|---|---|
| Reaction time |  | B | A | A | A | A | A |
| Gardner color | Step (1) | A | A | A | A | A | A |
|  | Step (2) | A | A | A | A | A | A |
| NCO% | Step (1) | A | A | A | B | A | B |
|  | Step (2) | A | A | A | B | A | B |

[Table 7]

|  |  | Comparative Example 1 | Comparative Example 2 | Comparative Example 3 | Comparative Example 4 | Comparative Example 5 | Comparative Example 6 |
|---|---|---|---|---|---|---|---|
| Reaction time |  | C | A | C | A | C | A |
| Gardner color | Step (1) | B | D | B | C | B | C |
|  | Step (2) | C | D | B | D | B | D |
| NCO% | Step (1) | A | C | A | C | A | C |
|  | Step (2) | A | C | A | C | A | C |

[Table 8]

|  |  | Comparative Example 7 | Comparative Example 8 | Comparative Example 9 | Comparative Example 10 | Comparative Example 11 | Comparative Example 12 |
|---|---|---|---|---|---|---|---|
| Reaction time | | C | A | C | A | B | A |
| Gardner color | Step (1) | B | B | C | D | C | D |
| | Step (2) | B | C | C | D | C | D |
| NCO% | Step (1) | A | C | A | C | A | C |
| | Step (2) | A | C | A | C | A | C |

(Color Tone of Laminate)

The polyurethane polyisocyanate (A1-1) was used as the polyisocyanate composition (X-1), and a trifunctional polypropylene glycol having a molecular weight of 400 (EXCENOL 430) manufactured by AGC Inc.) was used as the polyol composition (Y), and the polyurethane polyisocyanate (A1-1) and the trifunctional polypropylene glycol were mixed at a blending ratio shown in Table 9 to prepare a two-component curable adhesive of Example 1.

Adhesives in Examples 2 to 12 and Comparative Examples 1 to 12 were prepared in the same manner as in Example 1 except that polyurethane polyisocyanates (A1-2) to (A1-12) and (A1'-1) to (A1'-12) were changed to polyisocyanate compositions (X-2) to (X-12) and (X'-1) to (X'-12), respectively.

The prepared adhesive was applied to a plain stretched polypropylene film at a coating amount of about 2.0 g/m$^2$ using a laminator in which the lamination speed was set to 150 m/min, and then the plain stretched polypropylene film was bonded to a non-stretched polypropylene film, followed by aging at 40°C for 3 days, and a laminate for evaluation was produced.

The produced laminate was cut into a strip shape of 15 cm × 15 cm, and the strip was fixed on a white copy paper (CHW-A4 manufactured by Nippon Paper Industries Co., Ltd.) with an adhesive tape. The color tone was visually evaluated, and the results were summarized in Tables 9 to 12.

A: colorless

B: slight yellow

C: yellow

D: deep yellow

[Table 9]

|  | Example 1 | Example 2 | Example 3 | Example 4 | Example 5 | Example 6 |
|---|---|---|---|---|---|---|
| Polyisocyanate composition (X-1) | 10 | | | | | |
| Polyisocyanate composition (X-2) | | 10 | | | | |
| Polyisocyanate composition (X-3) | | | 10 | | | |
| Polyisocyanate composition (X-4) | | | | 10 | | |
| Polyisocyanate composition (X-5) | | | | | 10 | |
| Polyisocyanate composition (X-6) | | | | | | 10 |
| Polyol composition (Y) | 1 | 1 | 1 | 1 | 1 | 1 |
| Color of laminate | A | A | A | A | A | A |

[Table 10]

|  | Example 7 | Example 8 | Example 9 | Example 10 | Example 11 | Example 12 |
|---|---|---|---|---|---|---|
| Polyisocyanate composition (X-7) | 10 |  |  |  |  |  |
| Polyisocyanate composition (X-8) |  | 10 |  |  |  |  |
| Polyisocyanate composition (X-9) |  |  | 18 |  |  |  |
| Polyisocyanate composition (X-10) |  |  |  | 18 |  |  |
| Polyisocyanate composition (X-11) |  |  |  |  | 18 |  |
| Polyisocyanate composition (X-12) |  |  |  |  |  | 18 |
| Polyol composition (Y) | 1 | 1 | 1 | 1 | 1 | 1 |
| Color of laminate | A | A | A | A | A | A |

[Table 11]

|  | Comparative Example 1 | Comparative Example 2 | Comparative Example 3 | Comparative Example 4 | Comparative Example 5 | Comparative Example 6 |
|---|---|---|---|---|---|---|
| Polyisocyanate composition (X'-1) | 10 |  |  |  |  |  |
| Polyisocyanate composition (X'-2) |  | 10 |  |  |  |  |
| Polyisocyanate composition (X'-3) |  |  | 10 |  |  |  |
| Polyisocyanate composition (X'-4) |  |  |  | 10 |  |  |
| Polyisocyanate composition (X'-5) |  |  |  |  | 10 |  |
| Polyisocyanate composition(X'-6) |  |  |  |  |  | 10 |
| Polyol composition (Y) | 1 | 1 | 1 | 1 | 1 | 1 |
| Color of laminate | C | D | B | D | B | D |

[Table 12]

|  | Comparative Example 7 | Comparative Example 8 | Comparative Example 9 | Comparative Example 10 | Comparative Example 11 | Comparative Example 12 |
|---|---|---|---|---|---|---|
| Polyisocyanate composition (X'-7) | 10 |  |  |  |  |  |
| Polyisocyanate composition (X'-8) |  | 10 |  |  |  |  |
| Polyisocyanate composition (X'-9) |  |  | 18 |  |  |  |
| Polyisocyanate composition (X'-10) |  |  |  | 18 |  |  |

(continued)

|  | Comparative Example 7 | Comparative Example 8 | Comparative Example 9 | Comparative Example 10 | Comparative Example 11 | Comparative Example 12 |
|---|---|---|---|---|---|---|
| Polyisocyanate composition (X'-11) |  |  |  |  | 18 |  |
| Polyisocyanate composition (X'-12) |  |  |  |  |  | 18 |
| Polyol composition (Y) | 1 | 1 | 1 | 1 | 1 | 1 |
| Color of laminate | B | C | C | D | C | D |

**Claims**

1. A polyisocyanate composition (X) comprising:

   a polyurethane polyisocyanate (A1) which is a reaction product of a diisocyanate monomer (1) and a polyol compound (m);
   0.1 mass% or less of a diisocyanate monomer (1');
   sodium; and
   magnesium, wherein
   the sodium has a content of 100 ppb or more and 700 ppb or less of the polyurethane polyisocyanate (A1),
   the magnesium has a content of 10 ppb or more and 50 ppb or less of the polyurethane polyisocyanate (A1), and
   the sodium and the magnesium have a mass ratio Na/Mg of 2 or more and 70 or less.

2. The polyisocyanate composition (X) according to claim 1, wherein
   the polyol compound (m) is a polyether polyol.

3. The polyurethane polyisocyanate composition (X) according to claim 1, further comprising:
   a polyisocyanate (A2) which is at least one selected from a biuret product, a nurate product, an allophanate product, a carbodiimide-modified product, and a uretdione-modified product of at least one diisocyanate selected from an aromatic diisocyanate, an aromatic aliphatic diisocyanate, an aliphatic diisocyanate, and an alicyclic diisocyanate.

4. A two-component curable composition comprising:

   the polyisocyanate composition (X) according to claim 1; and
   an isocyanate-reactive composition containing a compound having reactivity with an isocyanate.

5. A two-component curable adhesive comprising:

   the polyisocyanate composition (X) according to claim 1; and
   a polyol composition (Y) containing a polyol compound (B).

6. A laminate comprising:

   a first base material;
   a second base material; and
   an adhesive layer bonding the first base material and the second base material, wherein
   the adhesive layer is a cured coating film of the two-component curable adhesive according to claim 5.

7. A packaging material comprising:
   the laminate according to claim 6.

## INTERNATIONAL SEARCH REPORT

<table>
<tr><td>International application No.</td></tr>
<tr><td>PCT/JP2024/014629</td></tr>
</table>

**A. CLASSIFICATION OF SUBJECT MATTER**

*C08G 18/10*(2006.01)i; *B32B 27/00*(2006.01)i; *B32B 27/40*(2006.01)i; *B65D 65/40*(2006.01)i; *C08G 18/48*(2006.01)i; *C09J 175/04*(2006.01)i; *C09J 175/08*(2006.01)i

FI: C08G18/10; B32B27/00 D; B32B27/40; B65D65/40 D; C08G18/48; C09J175/04; C09J175/08

According to International Patent Classification (IPC) or to both national classification and IPC

**B. FIELDS SEARCHED**

Minimum documentation searched (classification system followed by classification symbols)

C08G18/10; B32B27/00; B32B27/40; B65D65/40; C08G18/48; C09J175/04; C09J175/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 02-042068 A (SUMITOMO BAYER URETHANE CO.) 13 February 1990 (1990-02-13)<br>entire text | 1-7 |
| A | WO 2014/069605 A1 (ASAHI KASEI CHEMICALS CORPORATION) 08 May 2014 (2014-05-08)<br>entire text | 1-7 |
| A | JP 2021-195347 A (MITSUI CHEMICALS, INC.) 27 December 2021 (2021-12-27)<br>entire text | 1-7 |
| A | JP 2005-170793 A (MITSUI TAKEDA CHEMICALS INC.) 30 June 2005 (2005-06-30)<br>entire text | 1-7 |
| A | JP 2017-132924 A (ASAHI KASEI KABUSHIKI KAISHA) 03 August 2017 (2017-08-03)<br>entire text | 1-7 |

☑ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/014629** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2016-150997 A (TOSOH CORP.) 22 August 2016 (2016-08-22)<br>entire text | 1-7 |
| A | JP 2015-172164 A (ASAHI KASEI CHEMICALS CORPORATION) 01 October 2015 (2015-10-01)<br>entire text | 1-7 |
| A | JP 2015-028163 A (ASAHI KASEI CHEMICALS CORPORATION) 12 February 2015 (2015-02-12)<br>entire text | 1-7 |
| A | WO 03/051952 A1 (SANYO CHEMICAL INDUSTRIES, LTD.) 26 June 2003 (2003-06-26)<br>entire text | 1-7 |
| A | CN 112608447 A (WUXI WOODBRIDGE JIXING ADVANCED POLYMER TECHNOLOGY CO., LTD.) 06 April 2021 (2021-04-06)<br>entire text | 1-7 |

Form PCT/ISA/210 (second sheet) (July 2022)

## INTERNATIONAL SEARCH REPORT
### Information on patent family members

International application No.

**PCT/JP2024/014629**

| Patent document cited in search report | | | Publication date (day/month/year) | Patent family member(s) | | | Publication date (day/month/year) |
|---|---|---|---|---|---|---|---|
| JP | 02-042068 | A | 13 February 1990 | (Family: none) | | | |
| WO | 2014/069605 | A1 | 08 May 2014 | US entire text | 2015/0210631 | A1 | |
| | | | | EP | 2915803 | A1 | |
| | | | | KR | 10-2015-0041052 | A | |
| | | | | CN | 104619682 | A | |
| | | | | TW | 201430006 | A | |
| JP | 2021-195347 | A | 27 December 2021 | (Family: none) | | | |
| JP | 2005-170793 | A | 30 June 2005 | CN | 1626509 | A | |
| JP | 2017-132924 | A | 03 August 2017 | (Family: none) | | | |
| JP | 2016-150997 | A | 22 August 2016 | (Family: none) | | | |
| JP | 2015-172164 | A | 01 October 2015 | (Family: none) | | | |
| JP | 2015-028163 | A | 12 February 2015 | CN | 104250363 | A | |
| WO | 03/051952 | A1 | 26 June 2003 | US entire text | 2005/0131192 | A1 | |
| | | | | TW | 200301268 | A | |
| CN | 112608447 | A | 06 April 2021 | (Family: none) | | | |

Form PCT/ISA/210 (patent family annex) (July 2022)

28

**EP 4 703 398 A1**

### Patent documents cited in the description

- JP 2002265552 A